# EUROPEAN PATENT SPECIFICATION

(11) **EP 3 856 438 B1**
(45) Date of publication and mention of the grant of the patent: **18.09.2024**
(21) Application number: 19786434.1
(22) Date of filing: 25.09.2019
(51) Int. Cl.: B22F 10/28, B22F 10/32, B22F 10/36, B22F 10/366, B22F 12/90, B33Y 10/00, B33Y 50/02, B22F 10/31, B22F 12/70, B33Y 30/00

(54) **METHOD FOR ADDITIVE MANUFACTURING**
GENERATIVES FERTIGUNGSVERFAHREN
PROCÉDÉ DE FABRICATION ADDITIVE

(30) Priority: 25.09.2018 EP 18020464
(43) Date of publication of application: 04.08.2021
(73) Proprietor: Linde GmbH, 82049 Pullach (DE)
(72) Inventor: SCHOLZ, Jürgen, 81379 München (DE); FORET, Pierre, 80796 München (DE); BAUER, Dominik, 82110 Germering (DE); PAUZON, Camille, 46130 Trolhättan (SE); ARUNPRASAD, Tanja, 80336 München (DE)
(74) Representative: Gellner, Bernd
(86) International application number: PCT/EP2019/025316
(87) International publication number: WO 2020/064147

(56) References cited:
- CN-A- 108 339 983
- US-A1- 2017 165 781
- KASPEROVICH GALINA ET AL: "Correlation between porosity and processing parameters in TiAl6V4 produced by selective laser melting", MATERIALS & DESIGN, ELSEVIER, AMSTERDAM, NL, vol. 105, 20 May 2016 (2016-05-20), pages 160 - 170, XP029623547, ISSN: 0264-1275, DOI: 10.1016/J.MATDES.2016.05.070
- GRZEGORZ MOROZ ET AL: "How Helium improves Additive Manufacturing of Ti-6Al-4V and IN718 parts", ACTA MATERIALIA., 11 May 2017 (2017-05-11), GB, XP055563695, ISSN: 1359-6454
- JOSE RUIZ ET AL: "Study of the Influence of Shielding Gases on Laser Metal Deposition of Inconel 718 Superalloy", MATERIALS, vol. 11, no. 8, 9 August 2018 (2018-08-09), pages 1388, XP055563684, DOI: 10.3390/ma11081388

## Description

The present invention relates to a method for laser powder bed fusion manufacturing.

The main differences between processes for additive manufacturing (AM) are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies. These additive manufacturing processes are summarized by the term laser powder bed fusion (L-PBF).

Selective laser sintering (SLS) is an additive manufacturing (AM) technique that uses a laser as the power source to sinter powdered material, aiming the laser automatically at points in space defined by a 3D model, binding the material together to create a solid structure. It is similar to direct metal laser sintering (DMLS). Both are instantiations of the same concept but differ in technical details. Selective laser melting (SLM) uses a comparable concept, but in SLM the material is fully melted rather than sintered, allowing different properties (crystal structure, porosity, and so on). SLS involves the use of a high power laser (for example, a carbon dioxide laser) to fuse small particles of plastic, metal, ceramic, or glass powders into a mass that has a desired three-dimensional shape. The laser selectively fuses powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed. Because finished part density depends on peak laser power, rather than laser duration, a SLS machine typically uses a pulsed laser.

Selective laser melting (DLMS) is a particular rapid prototyping, 3D printing, or Additive Manufacturing (AM) technique designed to use a high power-density laser to melt and fuse metallic powders together. In many SLM is considered to be a subcategory of Selective Laser Sintering (SLS). The SLM process has the ability to fully melt the metal material into a solid 3D-dimensional part unlike SLS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, either argon or nitrogen at oxygen levels below 500 to1000 parts per million. Once each layer has been distributed, each 2D slice of the part geometry is fused by selectively melting the powder. This is accomplished with a high-power laser beam, usually a fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

Direct metal laser sintering (DMLS) is an additive manufacturing metal fabrication technology, occasionally referred to as selective laser sintering (SLS) or selective laser melting (SLM), that generates metal prototypes and tools directly from computer aided design (CAD) data. It is unique from SLS or SLM because the process uses a laser to selectively fuse a fine metal powder. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a stl-file is created and sent to the machine's computer program. The DMLS machine uses a high-powered 200 watt Yb-fiber optic laser. Inside the build chamber area, there is a material dispensing platform and a built platform along with a recoater blade used to move new powder over the built platform. The technology fuses metal powder into a solid part by melting it locally using the focused laser beam. Parts are built up additively layer by layer, typically using layers 20 to 50 micrometers thick.

In general, additive manufacturing is a manufacturing technology that includes a methodology whereby a heat source melts a feedstock of material which is deposited onto a substrate. Computer control of the movement of the heat source, and/or the source of the feedstock, makes it possible to build complex components. In additive manufacturing the processing is not limited to the above-mentioned methods in which metal powders are processed but composites or polymers are processed. The heat source can include (but is not limited to) the already mentioned laser beam, an arc, or other plasma-based heat sources.

LMF processes take place in a process chamber that is filled with a process gas. Usually, an inert gas is used, in which the contaminants must be strictly controlled. For example, the oxygen content may not exceed a certain threshold between 1ppm and 1000ppm. Another example of contamination is the moisture present in the process space, which also needs to be tightly controlled. Further examples of impurities are nitrogen, hydrogen, CO₂ and other gases.

When a process chamber of an additive manufacturing device is opened to remove a manufactured component in order to begin production of a new component, ambient air enters the process chamber. This ambient air must be removed by purging the chamber with inert gas until the oxygen content has dropped to a certain threshold. The purging gas is introduced into the process chamber via one or more gas inlets. The purging of the chamber takes a relatively long time, especially when the threshold levels of impurities are low.

Another source of contamination is the powder itself, which may have absorbed impurities on the surface of the particles, which are then released during the melting process, thereby contaminating the process gas atmosphere. Therefore, a continuous cleaning process or rinse process of the process chamber is used to keep the impurities below an allowable threshold.

During additive manufacturing the laser sintering or laser melting of the powder feed requires inert gas protection as the resulting molten metal can be in the range of over 600°C for alumina alloys or over 1500°C for most other metals. It is vital that the melt pool be protected from high temperature oxidation from oxygen in the atmosphere. It is vital that oxygen levels are below 1000 ppm or for sensitive materials like titanium and its alloys, the requirement can be below 100 ppm and lower and for some other alloys very sensitive to oxygen can be as low as 10 ppm.

It is always necessary to protect the molten pool from oxidation as this can lead to defects and a reduction in corrosion resistance and reduced mechanical properties and lower fatigue and fracture strength. This particularly is the case in creep resistant materials, alloy steels, stainless steels and its alloys, nickel and its alloys and titanium and its alloys. The usual method of protecting the chamber is to purge the volume by passing a stream of an inert gas such as argon into the chamber volume to reduce the oxygen level. This limits the availability of oxygen at the side of the laser melt pool to cause oxidation. Some materials suffer oxidation discoloration in reactive metals and embrittlement by oxygen.

A process chamber is mostly purged with an inert gas, generally argon and rarely nitrogen, to remove air from a built space and/or a process chamber. The oxygen content inside the chamber is at a level of about 0,1 % O₂ (1000 ppm) after a purging process and during manufacturing process. This aims at reducing material oxidation.

The flow of inert gas ensures for example a clean laser path, the removal of fumes and spatter nearby the process area, where the laser hits the powder bed.

The nature and properties concerning thermal conductivity and density of the shielding gas are impacting significantly the components' properties concerning porosity.

Most efforts to improve existing additive manufacturing techniques focus on laser parameters such as power, scanning speed etc. in order to optimize the Laser Powder Bed Process. Mostly a process gas is only used to ensure removal of fumes and spatter. In this context, the process window is narrow and processing speed is limited in order to achieve high density parts.

The scope of gases for Laser Powder Bed Fusion is today limited to Argon and/or Nitrogen, for their inert character to most metal powders available. However, while Argon is a noble gas, Nitrogen may dissociate and react with the high temperature *30* metal, possibly forming nitrides.

Document*How Helium improves Additive Manufacturing of Ti-6AI-4V and IN718 parts,* from Grzegorz Moroz and Pierre For6t, Linde AG, describes argon-helium process gas mixtures for laser powder bed fusion additive manufacturing processes.

It is an object of the present invention to provide an additive manufacturing method, in particular an L-PBF method, allowing a higher (laser) scanning speed, an increasing processing speed and reduced porosity so that high density parts can be provided.

This problem is solved by a method according to independent claim 1. Advantageous embodiments are defined in the sub-claims.

According to the present invention a method is provided for laser powder bed fusion manufacturing of a Ti-6Al-4V part comprising the following steps: providing a metal powder on a built platform in an additive manufacturing space, melting the metal powder with a laser, and repeating the aforementioned steps, wherein a gas is fed to the additive manufacturing space, wherein the gas is Helium or wherein the gas is a gas mixture comprising Helium and 10 Vol-% to 80 Vol-% Argon or 30 Vol-% to 50 Vol-% Argon, wherein the laser power is between 200 W and 400 W, the hatch distance is between 0,12 mm and 0,16 mm and the laser scanning speed is higher than 1250 mm/s or higher than 1500 mm/s or higher than 1750 mm/s or higher than 2000 mm/s.

According to an aspect of the invention it is provided that Helium or the gas mixture comprising Helium and Argon is fed to the manufacturing space before the manufacturing process starts for purging the manufacturing space and during the manufacturing process for providing the gas mixture comprising Helium and Argon as a process gas to the manufacturing space.

According to another aspect of the present invention a known purging gas is used, which is fed to the manufacturing space before the manufacturing process starts for purging the manufacturing space and during the manufacturing process Helium or the gas mixture comprising Helium and Argon is fed to the manufacturing space for processing.

Helium and Argon do not dissociate and do not react with the material upon collision with a laser beam. However, Helium is lighter, has a higher thermal conductivity and ionization energy than Argon.

According to the present invention Helium or Helium-Argon mixtures are used to achieve higher laser powder bed fusion components with respect to density. The present invention increases the final product quality and the productivity of the process.

It has been found that by using the process parameters according to claim 1 a high laser scanning speed and an increased processing speed can be achieved while the resulting part shows a low porosity so that high quality and high density parts can be provided.

Using Helium or Helium-Argon gas mixtures, high density of parts is achieved upon higher scanning speed compared to standard Argon atmosphere which can result in time reduction of an average processing speed (scanning speed x hatching space x layer thickness) up to 40% as compared to standard scanning speeds while similar or better quality is achieved.

The inventors of the present invention have recognized that the use of different gases for same laser parameter results in different as-built porosity, and thus mechanical properties. The as-built porosity defines the porosity of a part after manufacturing without any follow-up treatment. Therefore, by selecting the correct laser and process parameters, such as laser power, hatching distance and scanning speed, it is possible to produce a high quality part within a relative short time.

The argon helium gas mixtures according to the present invention comprises Helium or Helium and at least 10 Vol-% or 15 Vol-% or 20 Vol-% or 25 Vol-% or 30 Vol-% or 35 Vol-% or 40 Vol-% or 50 Vol-% or 55 Vol-% or 60 Vol-% or 70Vol-% or 75 Vol-% Argon or respectively comprises Helium and no more than 10 Vol-% or 15 Vol-% or 20 Vol-% or 25 Vol-% or 30 Vol-% or 35 Vol-% or 40 Vol-% or 50 Vol-% or 55 Vol-% or 60 Vol-% or 70Vol-% or 75 Vol-% Argon.

The laser power used according to the invention is between 200 W and 400 W or between 240 W and 360 W or between 250 W and 330 W.

The hatch distance is preferably be chosen to be between 0,12 mm and 0,16 mm or between 0,13mm and 0,15mm, for example 0,14mm. The laser scanning speed is set to a speed higher than 1250 mm/s or higher than 1500 mm/s or higher than 1750 mm/s or higher than 2000 mm/s. Good results have been achieved with a laser scanning speed up to 2400 mm/s, for example with a scanning speed of 1400 mm/s, with a scanning speed of 1733 mm/s or with a scanning speed of 2067 mm/s.

Within the present invention additive manufacturing techniques like metal selective laser sintering, metal laser melting, direct metal printing, selective laser melting and direct metal laser sintering are comprised by the term laser powder bed fusion (L-PBF). Laser parameter can be optimized with respect to the gas mixture and/or to the material of the metal powder.

The instant invention increases the scanning speed and displaces air that is present inside a manufacturing space or a corresponding component of an apparatus for additive manufacturing to be purged and/or processed, thereby replacing the air and oxygen present therein with the gas mixture comprising Helium and Argon.

An oxygen level in the manufacturing space can be controlled via an oxygen monitoring system so that constant oxygen level is provided. A suitable oxygen monitoring system is disclosed for example in EP 3 075 470 A. EP 3 075 470 A discloses a method for producing a metallic workpiece in layers by additive manufacturing, in which metallurgical layers of the workpiece are produced by providing in each case a metallic material and a laser beam in a production chamber for each metallurgical layer, and during the application the layers of the metallic material in the production chamber, a gas atmosphere is provided. According to an embodiment of the invention, a part of the gas atmosphere is withdrawn as a gas stream from the production chamber, at least one parameter of the gas stream and/or the gas atmosphere is determined and compared with a desired value. Depending on the comparison of the parameter with the desired value, the gas stream is returned to the production chamber and a process gas is supplied to the production chamber.

Current machine design only accommodate the use of Argon or Nitrogen as shielding gas and cannot establish homogeneous process conditions for Helium and its mixtures. If a Helium-Argon mixture is used in a not modified printer the gas flow could not be sufficient and the oxygen measurement could not work and show a wrong O₂ value. Both issues will result in a non-reproducible process. In this context, the process window is narrow and processing speed is limited in order to achieve high density parts.

Therefore, oxygen level in the manufacturing space is controlled via an oxygen monitoring and controlling system (comprising a trace analyzer) so that the content of oxygen in the manufacturing space is reduced to a set predetermined level and is kept at this level. Preferably the trace analyzer is calibrated for Helium or Argon-Helium mixtures. The oxygen trace analyzer further ensures the repeatability of the process. The set predetermined level can be determined by the sensitivity of the powder to oxygen, wherein the said oxygen level is preferably less than 1000 ppm or less than 100 ppm or less than 10 ppm in the manufacturing space.

According to the present invention the manufacturing space can be a built space of a production unit defined by a wall of a housing of the production unit and a built platform of a lift table disposed inside the wall of the housing.

Furthermore, the noble gas mixture of Helium and Argon is used according to the invention to enhance the production of high quality Ti-6AI-4V parts. The Helium and Argon mixture will not dissociate and not react with the material upon collision with the laser beam.

According to the present invention a gas for additive manufacturing is provided wherein the gas is Helium or wherein the gas is a gas mixture comprising Helium and 10 Vol-% to 80 Vol-% Argon or 30 Vol-% to 50 Vol-% Argon.

An apparatus for additive manufacturing not covered by the claims comprises a powder delivery system comprising a storage unit for metal powder and an application device for applying the powder onto a built platform, a laser for melting the powder, and a production unit for additive manufacturing using metal powders comprising a housing with a wall, a lift table with a built platform disposed inside the wall of the housing, wherein the wall of the housing and the built platform define a built space, and wherein a device for feeding a gas mixture comprising Helium and Argon to the manufacturing space is connected to the built space and/or to a process chamber of the device.

Furthermore, the device for feeding a gas mixture comprising Helium and Argon may comprise at least one storage vessel for a gas mixture comprising Helium and Argon or two separate storage vessels and a mixing device for providing the gas mixture in different ratios during manufacturing.

Furthermore, a feeding device like a nozzle and or a pump for feeding the gas mixture comprising Helium and Argon to the manufacturing space can be provided.

A gas mixture control system and/or a gas flow controlling system can be provided for controlling a gas flow of the gas mixture comprising Helium and Argon and/or a ratio of Helium to Argon in the gas mixture.

An oxygen controlling system with an oxygen sensor can be provided for controlling an oxygen level in the manufacturing space.

The oxygen sensor (for example, an electronic device) for measuring the proportion of oxygen (O₂) in the manufacturing space is preferably provided in the manufacturing space, wherein the oxygen sensor is connected to a control unit and the control unit is connected to the device for feeding the gas mixture comprising Helium and Argon for controlling the device for feeding the gas mixture comprising Helium and Argon according to the value measured by the oxygen sensor.

For the objects mentioned before the oxygen monitoring and controlling system (comprising a trace analyzer) according to EP 3 075 470 A can be used.

The means for circulating or recirculating the process gas can be an axial or a radial fan of the apparatus for additive manufacturing. Fans can produce flow velocities of an order of magnitude, or more, higher than natural convection. High pressure radial fans, combined with suitably shaped nozzles or outlet ducts for purging the manufacturing space for example according to the shape of the component can provide the gas mixture comprising Helium and Argon. The use of a fan inside a chamber makes convenient use of the existing gas atmosphere in the chamber to provide the gas flow of the mixture comprising Helium and Argon.

The invention is explained below with the aid of an embodiment shown in the drawing. The drawing shows in:

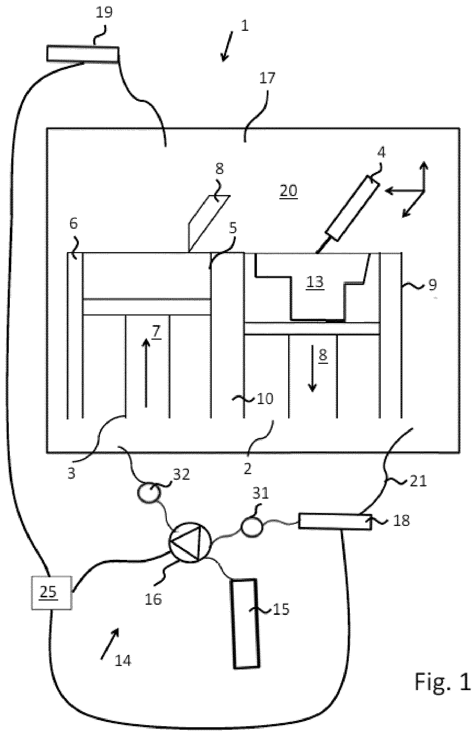

Figure 1 a rough schematic view of a device for additive manufacturing Hereinafter an apparatus for additive manufacturing is explained in detail (Figure 1).

The apparatus 1 comprises a production unit 2, a delivery unit 3 and a heat source 4.

The heat source 4 according to a preferred embodiment comprises a laser, for example a fiber laser, and a corresponding scanner system for melting metal powder (not shown).

The delivery unit 3 comprises a housing 5 with a wall 6 wherein a powder delivery piston 7 is disposed inside the housing 5.

A powder applying device 8, for example a roller, is provided for pushing a metal powder from the delivery unit 3 to the production unit 2.

The production unit 3 comprises a housing 9 with a wall 10.

A lift table 11 with a built platform 12 is disposed inside the wall 10 of the housing 9. The lift table 11 and the corresponding built platform 12 embody a fabrication piston.

The wall 10 of the housing 9 and the built platform 12 of the lift table 11 of the production unit 2 define a built space 13.

The built space 13 houses the fabrication powder bed and therefore the object being fabricated.

The built platform 12 can be an integral part of the lift table 11 of the fabrication piston or a separate part connected to the lift table 11.

Furthermore, a processing chamber 17 is provided surrounding the production unit 2, the delivery unit 3 and the heat source 4.

The manufacturing space 20 is therefore the build space 13 of the production unit 2 defined by the wall 10 of the housing 9 of the production unit 2 and the lift table 11 with the built platform 12 disposed inside the wall 10 of the housing 9, and/or the manufacturing space is the room within the processing chamber 17.

A device 14 for feeding Helium or a gas mixture comprising Helium and Argon to the manufacturing is connected to the processing chamber 17 of the apparatus 1.

The gas is Helium or the gas is a gas mixture comprising Helium and 10 Vol-% to 80 Vol-% Argon or 30 Vol-% to 50 Vol-% Argon.

Furthermore the Argon-Helium gas mixture comprises Helium and at least 10 Vol-% or 15 Vol-% or 20 Vol-% or 25 Vol-% or 30 Vol-% or 35 Vol-% or 40 Vol-% or 50 Vol-% or 55 Vol-% or 60 Vol-% or70Vol-% or 75 Vol-% Argon or respectively comprises Helium and no more than 10 Vol-% or 15 Vol-% or 20 Vol-% or 25 Vol-% or 30 Vol-% or 35 Vol-% or 40 Vol-% or 50 Vol-% or 55 Vol-% or 60 Vol-% or 70Vol-% or 75 Vol-% Argon.

The device 14 for feeding a gas mixture comprising Helium and Argon to the manufacturing space comprises at least storage vessel 15 for the gas mixture comprising Helium and Argon to the manufacturing and a feeding device 16 like a duct and/or a nozzle and/or a pump for feeding the gas mixture comprising Helium and Argon to the manufacturing space.

Alternatively, two vessels are provided wherein in one vessel the Helium is stored and in the other vessel the Argon is stored (not shown). According to such an embodiment a mixing device is provided, which can be part of the feeding device 14 or of a gas flow controlling system 18 for mixing the Argon and Helium in a predetermined value. The mixing device is then part of the device 14 for feeding a gas mixture comprising Helium and Argon to the manufacturing space

The gas mixture and/or a gas flow controlling system 18 is provided for controlling a gas flow of the helium and/or the gas mixture comprising Helium and Argon and/or a ratio of Helium to Argon in the gas mixture.

Furthermore, an oxygen sensor (not shown) for measuring the proportion of oxygen (O₂) in the manufacturing space 20 is provided, which is part of an oxygen monitoring and controlling system.

The external oxygen monitoring and controlling system 19 with the oxygen sensor is provided for controlling an oxygen level in the manufacturing space.

The gas mixture and/or a gas flow controlling system 18, 14 for controlling a gas flow of the gas mixture comprising Helium and Argon and/or a ratio of Helium to Argon in the gas mixture and the oxygen monitoring and controlling system 19 for recirculating the gas flow, wherein a consistent residual oxygen levels in the manufacturing space is kept via an oxygen trace analyzer can be embodied in a single system.

Pressure sensors 31, 32 are provided for measuring the differential pressure.

A suitable oxygen monitoring system 19 and gas flow monitoring and controlling system 18 is disclosed for example in EP 3 075 470 A. EP 3 075 470 A discloses a method for producing a metallic workpiece in layers by additive manufacturing, in which metallurgical layers of the workpiece are produced by providing in each case a metallic material and a laser beam in a production chamber for each metallurgical layer, and during the application the layers of the metallic material in the production chamber, a gas atmosphere is provided. A part of the gas atmosphere is withdrawn as a gas stream from the production chamber, at least one parameter of the gas stream and/or the gas atmosphere determined and compared with a desired value. Depending on the comparison of the parameter with the desired value, the gas stream is returned to the production chamber and a process gas is supplied to the production chamber.

According to this monitoring system, part of the gas atmosphere is extracted from the manufacturing chamber in the form of a gas stream and fed to an analyzer 24. One or more parameters of the gas stream are determined in the analyzer. Since the gas atmosphere consists of inert Helium or Helium and Argon, it is frequently sensible to control the water vapor content of the gas stream or the oxygen content of the gas stream in order to determine if the gas atmosphere is still sufficiently inert. Otherwise, an undesirable formation of pores could take place in the interior of the workpiece.

The parameters such as, for example, the water vapor content or the oxygen content of the gas stream are measured and compared with a nominal value in the analyzer. If the measured parameters lie below the nominal value, i.e. if the water vapor content or the oxygen content lies below the predefined nominal value, the gas stream can be completely returned into the manufacturing chamber.

The oxygen sensor is connected to a control unit 25 and the control unit is connected to the device 14 for feeding a gas mixture comprising Helium and Argon for controlling the device 14 for feeding a gas mixture comprising Helium and Argon according to the value measured by the oxygen sensor.

The oxygen sensor (electronic device) for measuring the proportion of oxygen (O2) in the manufacturing space is provided in the manufacturing space, wherein the oxygen sensor is connected to a control unit and the control unit is connected to the device for feeding gas mixture comprising Helium and Argon for controlling the device for feeding a gas mixture comprising Helium and Argon according to the value measured by the oxygen sensor.

The apparatus for additive manufacturing 1 establishes its atmosphere by first purging the chamber and then, when it measures that oxygen is less than a given value (often 1000 ppm O2), it starts to recirculate the gas mixture. Leakages and other side effects are compensated by a holding flow.

L-PBF machines are equipped with different kind of oxygen sensors, i.e. electro-chemical cells, ceramic sensors, etc. The calibration procedure and sensor operating range may vary from one OEM to another. To use an oxygen sensor in the most rigorous way, the latter should be calibrated at several points close to the targeted oxygen range within the used process gas for the process. However, since most of the end users are not yet aware of this issue, the regular use of calibration gas is not common manner. Usually the chamber oxygen sensors are calibrated in air by opening the chamber door. The sensor is calibrated at 20,9 % O₂ while the operating range is usually 0,1 % O₂ or below. Therefore, the one-point calibration may lead to inaccurate measurement during the process.

Besides, the effect of different species present in the chamber atmosphere may affect the measurement of the sensor, creating undesired deviations. For example, it is known that ceramic sensors (i.e. also called Lambda probes) are sensitive to the presence of hydrogen which may come from humidity in the air and feedstock. Another example is the dependence on gas molar mass for electro-chemical sensors, since oxygen will diffuse slower within a high molecular weight gas. Argon has a higher molecular weight than air, thus the oxygen will be underestimated. Helium, has a lower molecular weight than air, thus the oxygen will be overestimated.

In addition, one may question the machine's sensor position. In general, the machine design is so that the oxygen sensor is relatively away from the zone of interest, i.e. the laser-powder matter interaction area. For example, a sensor placed at the top of the chamber, may not be representative of the process and could be influenced by the shielding gas density.

By sampling a little bit of gas next to the baseplate, a measurement of the oxygen representative of the melt pool surrounding is performed.

Therefore it is necessary to adjust the gas flow and to control the oxygen level with an external system which is the external oxygen controlling system. These conditions allowed for a proper process projections removal.

In the simplest type of an automatic control loop, a controller compares a measured oxygen value of the process with a desired set value, and processes the resulting error signal to change some input to the process, in such a way that the process reaches the set oxygen point despite disturbances.

According to the present invention a method is provided for purging the manufacturing space 20 of an apparatus for additive manufacturing a Ti-6Al-4V part using metal powder.

Method for feeding gas to an additive manufacturing space before and/or during a manufacturing process wherein the gas is Helium or wherein the gas is a gas mixture comprising Helium and 10 Vol-% to 80 Vol-% Argon or 30 Vol-% to 50 Vol-% Argon.

The gas mixture comprises Helium and at least 10 Vol-% or 15 Vol-% or 20 Vol-% or 25 Vol-% or 30 Vol-% or 35 Vol-% or 40 Vol-% or 50 Vol-% or 55 Vol-% or 60 Vol-% or 70Vol-% or 75 Vol-% Argon or respectively comprises Helium and no more than 10 Vol-% or 15 Vol-% or 20 Vol-% or 25 Vol-% or 30 Vol-% or 35 Vol-% or 40 Vol-% or 50 Vol-% or 55 Vol-% or 60 Vol-% or70Vol-% or 75 Vol-% Argon.

The present invention can be defined as a method for additive manufacturing, wherein a Ti-6Al-4V part is built by selectively melting a material and building a part additively layer by layer using a laser, for example a fiber laser, melting the material, wherein the process is conducted in a chamber and the chamber is purged and processed with Helium or a gas mixture comprising Helium and Argon as defined above.

Before starting additive manufacturing like L-PBF the gas mixture comprising Helium and Argon enters the manufacturing space whereby air is displaced from the manufacturing space.

Thereby the content of oxygen in the manufacturing space is reduced to a set predetermined level.

The set predetermined level is determined by the sensitivity of the powder to oxygen to approximately 10 parts per million of oxygen so that the powder can be melted wherein the set oxygen level is preferably less than 1000 ppm or less than 100 ppm or less than 10 ppm.

The method comprises the further steps of:
providing a metal powder on the built platform,
melting the metal powder with a heat source and providing a process gas to the area of the built platform.

Then the aforementioned steps are repeated.

### List of Reference Numbers

- 1: device
- 2: production unit
- 3: delivery unit
- 4: heat source
- 5: housing
- 6: wall
- 7: powder delivery piston
- 8: powder applying device
- 9: housing
- 10: wall
- 11: lift table
- 12: built platform
- 13: build space
- 14: device for feeding Helium or a gas mixture comprising Helium and Argon
- 15: storage vessel
- 16: feeding device
- 17: processing chamber
- 18: gas flow monitoring and controlling system
- 19: oxygen monitoring and controlling system
- 20: manufacturing space
- 21: conduit
- 22 25: control unit
- 31: pressure sensor
- 32: pressure sensor

## Claims

1. Method for laser powder bed fusion manufacturing of a Ti-6AI-4V part comprising the following steps:
providing a metal powder on a built platform in an additive manufacturing space, melting the metal powder with a laser, and repeating the aforementioned steps, wherein a gas is fed to the additive manufacturing space, wherein the gas is Helium or wherein the gas is a gas mixture comprising Helium and 10 Vol-% to 80 Vol-% Argon or 30 Vol-% to 50 Vol-% Argon,
**characterized in that**
the laser power is between 200 W and 400 W, the hatch distance is between 0,12 mm and 0,16 mm and the laser scanning speed is higher than 1250 mm/s or higher than 1500 mm/s or higher than 1750 mm/s or higher than 2000 mm/s.

2. Method according to claim 1,
**characterized in that**
the gas mixture comprises Helium and at least 10 Vol-% or 15 Vol-% or 20 Vol-% or 25 Vol-% or 30 Vol-% or 35 Vol-% or 40 Vol-% or 50 Vol-% or 55 Vol-% or 60 Vol-% or70Vol-% or 75 Vol-% Argon or respectively comprises Helium and no more than 10 Vol-% or 15 Vol-% or 20 Vol-% or 25 Vol-% or 30 Vol-% or 35 Vol-% or 40 Vol-% or 50 Vol-% or 55 Vol-% or 60 Vol-% or70Vol-% or 75 Vol-% Argon.

3. Method according to claim 1 or 2,
**characterized in that**
the manufacturing space is a build space of a production unit defined by a wall of a housing of the production unit and a lift table with a built platform of a lift table disposed inside the wall of the housing, or **in that** the manufacturing space is a process chamber of an apparatus for additive manufacturing.

4. Method according to one of the claims 1 to 3,
**characterized in that**
a gas flow of the gas mixture comprising Helium and Argon and/or a ratio of Helium to Argon in the gas mixture is controlled via a gas mixture and/or a gas flow controlling system.

5. Method according to one of the claims 1 to 4,
**characterized in that**
an oxygen level in the manufacturing space is controlled via an oxygen monitoring system so that that the content of oxygen in the manufacturing space is reduced to a set predetermined level, wherein the set predetermined level is determined by the sensitivity of the powder to oxygen to approximately 10 parts per million of oxygen so that the powder can be melted wherein the set oxygen level is preferably less than 1000 ppm or less than 100 ppm or less than 10 ppm.

## Patentansprüche

1. Verfahren zum Fertigen eines Ti-6AI-4V-Teils mittels Laser-Pulverbettschmelzen, umfassend die folgenden Schritte:
Bereitstellen eines Metallpulvers auf einer gebauten Plattform in einem Raum additiver Fertigung, Schmelzen des Metallpulvers mit einem Laser und Wiederholen der vorgenannten Schritte, wobei dem Raum additiver Fertigung ein Gas zugeführt wird, wobei das Gas Helium ist oder wobei das Gas ein Gasgemisch ist, umfassend Helium und zu 10 Vol.-% bis 80 Vol.-% Argon oder zu 30 Vol.-% bis 50 Vol.-% Argon,
**dadurch gekennzeichnet, dass**
die Laserleistung zwischen 200 W und 400 W liegt, der Spurbreitenabstand zwischen 0,12 mm und 0,16 mm liegt, und die Laserscangeschwindigkeit höher als 1250 mm/s oder höher als 1500 mm/s oder höher als 1750 mm/s oder höher als 2000 mm/s ist.

2. Verfahren nach Anspruch 1,
**dadurch gekennzeichnet, dass**
das Gasgemisch Helium und zu mindestens 10 Vol.-% oder 15 Vol.-% oder 20 Vol.-% oder 25 Vol.-% oder 30 Vol.-% oder 35 Vol.-% oder 40 Vol.-% oder 50 Vol.-% oder 55 Vol.-% oder 60 Vol.-% oder 70 Vol.-% oder 75 Vol.-% Argon umfasst oder beziehungsweise Helium und zu nicht mehr als 10 Vol.-% oder 15 Vol.-% oder 20 Vol.-% oder 25 Vol.-% oder 30 Vol.-% oder 35 Vol.-% oder 40 Vol.-% oder 50 Vol.-% oder 55 Vol.-% oder 60 Vol.-% oder 70 Vol.-% oder 75 Vol.-% Argon umfasst.

3. Verfahren nach Anspruch 1 oder 2,
**dadurch gekennzeichnet, dass**
der Fertigungsraum ein Bauraum einer Produktionseinheit ist, der durch eine Wand eines Gehäuses der Produktionseinheit und einen Hubtisch definiert ist, wobei eine Bauplattform eines Hubtischs innerhalb der Wand des Gehäuses angeordnet ist, oder **dadurch, dass** der Fertigungsraum eine Prozesskammer einer Vorrichtung zum additiven Fertigen ist.

4. Verfahren nach einem der Ansprüche 1 oder 3,
**dadurch gekennzeichnet, dass**
ein Gasfluss des Gasgemisches, umfassend Helium und Argon, und/oder ein Verhältnis von Helium zu Argon in dem Gasgemisch über ein Gasgemisch- und/oder Gasflusssteuersystem gesteuert wird.

5. Verfahren nach einem der Ansprüche 1 oder 4,
**dadurch gekennzeichnet, dass**
ein Sauerstoffniveau in dem Fertigungsraum über ein Sauerstoffüberwachungssystem so gesteuert wird, dass der Sauerstoffgehalt in dem Fertigungsraum auf ein eingestelltes vorbestimmtes Niveau reduziert wird, wobei das eingestellte vorbestimmte Niveau durch die Empfindlichkeit des Pulvers gegenüber Sauerstoff auf etwa 10 Teile pro Million Sauerstoff bestimmt wird, sodass das Pulver geschmolzen werden kann, wobei das eingestellte Sauerstoffniveau vorzugsweise weniger als 1000 ppm oder weniger als 100 ppm oder weniger als 10 ppm beträgt.

## Revendications

1. Procédé destiné à la fabrication par fusion laser en lit de poudre d'une pièce en Ti-6AI-4V comprenant les étapes suivantes :
fourniture d'une poudre métallique sur une plate-forme construite dans un espace de fabrication additive, fusion de la poudre métallique avec un laser, et répétition des étapes susmentionnées, dans lequel un gaz est alimenté à l'espace de fabrication additive, dans lequel le gaz est de l'hélium ou dans lequel le gaz est un mélange de gaz comprenant de l'hélium et 10 % en vol. à 80 % en vol. d'argon ou 30 % en vol. à 50 % en vol. d'argon,
**caractérisé en ce que**
la puissance laser est comprise entre 200 W et 400 W, la distance de hachure est comprise entre 0,12 mm et 0,16 mm et la vitesse de balayage laser est supérieure à 1250 mm/s ou supérieure à 1500 mm/s ou supérieure à 1750 mm/s ou supérieure à 2000 mm/s.

2. Procédé selon la revendication 1,
**caractérisé en ce que**
le mélange de gaz comprend de l'hélium et au moins 10 % en vol. ou 15 % en vol. ou 20 % en vol. ou 25 % en vol. ou 30 % en vol. ou 35 % en vol. ou 40 % en vol. ou 50 % en vol. ou 55 % en vol. ou 60 % en vol. ou 70 % en vol. ou 75 % en vol. d'argon ou comprend respectivement de l'hélium et pas plus de 10 % en vol. ou 15 % en vol. ou 20 % en vol. ou 25 % en vol. ou 30 % en vol. ou 35 % en vol. ou 40 % en vol. ou 50 % en vol. ou 55 % en vol. ou 60 % en vol. ou 70 % en vol. ou 75 % en vol. d'argon.

3. Procédé selon la revendication 1 ou 2,
**caractérisé en ce que**
l'espace de fabrication est un espace de construction d'une unité de production définie par une paroi d'un logement de l'unité de production et une table élévatrice avec une plate-forme construite d'une table élévatrice disposée à l'intérieur de la paroi du logement, ou **en ce que** l'espace de fabrication est une chambre de processus d'un appareil pour fabrication additive.

4. Procédé selon l'une des revendications 1 à 3,
**caractérisé en ce que**
un débit de gaz du mélange de gaz comprenant de l'hélium et de l'argon et/ou un rapport de l'hélium à l'argon dans le mélange de gaz sont commandés par l'intermédiaire d'un système de commande de mélange de gaz et/ou de débit de gaz.

5. Procédé selon l'une des revendications 1 à 4,
**caractérisé en ce que**
un taux d'oxygène dans l'espace de fabrication est commandé par l'intermédiaire d'un système de surveillance d'oxygène de sorte que la teneur en oxygène dans l'espace de fabrication est réduite à un niveau prédéterminé réglé, dans lequel le niveau prédéterminé réglé est déterminé par la sensibilité de la poudre à l'oxygène à approximativement 10 parties par million d'oxygène de sorte que la poudre peut être fondue dans lequel le taux d'oxygène réglé est de préférence inférieur à 1000 ppm ou inférieur à 100 ppm ou inférieur à 10 ppm.
